# EUROPEAN PATENT SPECIFICATION

(11) **EP 0 994 275 B1**
(45) Date of publication and mention of the grant of the patent: **24.09.2003**
(21) Application number: 98203409.2
(22) Date of filing: 12.10.1998
(51) Int. Cl.: F16G 5/16, F16H 9/24

(54) **Drive belt, element therefor and construction in which this is used**
Treibriemen, Element dafür und mit diesem versehene Vorrichtung
Courroie de transmission, élément pour celle-çi et ensemble l'utilisant

(43) Date of publication of application: 19.04.2000
(73) Proprietor: Van Doorne's Transmissie B.V., 5000 AM Tilburg (NL)
(72) Inventor: Smeets, Paulus Maria, 5046 JC Tilburg (NL); Lith, Johannes Hendrikus, 5258 PL Berlicum (NL)

(56) References cited:
- EP-A- 0 381 258
- PATENT ABSTRACTS OF JAPAN vol. 9, no. 223 (M-411), 10 September 1985 & JP 60 081537 A (TOYOTA JIDOSHA)), 9 May 1985
- PATENT ABSTRACTS OF JAPAN vol. 17, no. 284 (M-1421), 31 May 1993 & JP 05 010405 A (TOYOTA MOTOR), 19 January 1993
- PATENT ABSTRACTS OF JAPAN vol. 9, no. 300 (M-433), 27 November 1985 & JP 60 136650 A (TAIHOU KOGYO), 20 July 1985
- PATENT ABSTRACTS OF JAPAN vol. 8, no. 210 (M-328), 26 September 1984 & JP 59 097344 A (TOYOTA JIDOSHA), 5 June 1984

## Description

The present invention relates to, inter alia, a drive belt for a transverse element intended to be accomodated in a continuously variable transmission having belt discs having an at least partially conical contact surface for enclosing a drive belt between pairs of said discs, which drive belt to this end to comprise one or more transverse elements, the transverse element being provided with converging side faces intended to come into contact with the contact surface of a belt disc, wherein one or more side faces possess a surface which has protuberances providing a profile, which surface has therein contact faces, defined by the protuberances, for coming into contact with the contact surface of a belt disc.

A transverse element of this type is disclosed in European Patent Application 0.381.258: the elements have a predetermined profiled contact surface having protuberances formed by ridges and having recesses formed by grooves. In the known construction the width of the contact face of a ridge, measured "in the profile", is at most 100 µm and the width of a groove is less than or equal to 300 µm, the grooves taking up at least fifty percent of the total surface in which they are present. The drive belt operates together with a set of belt discs in combination with supplied oil, which inter alia serves to remove heat. In the known construction the ratio between the surface dimensions of protuberances and grooves is optimised with respect to the discharge of oil into the grooves and collection of oil in said grooves, in order to prevent slip between drive belt and belt disc. The known construction has the disadvantage that when the transmission is taken into use for the first time damage to the pulley and belt, or breakage of the belt, can occur initially.

The aim of the present invention is at least advantageously to overcome or substantially to prevent this phenomenon, at least to obtain an improved profile, preferably a profile shaped such that, in order to prevent the above mentioned problems, optimum account is taken of physical phenomena which arise between drive belt and belt disc during running in.

According to the invention this is achieved when the profile is shaped such that on cross-sectioning parallel to the side face concerned or after wear of the profile at or down to a level located at least thirty percent and at most seventy percent of the profile height beneath the initial profile height, the surface area effectively available for coming into contact with the contact surface of a belt disc lies within the range of forty to sixty percent with respect to the dimensions of the side face in which the contact faces are present.

In accordance with the insight on which the invention is based, a construction of this type advantageously provides a possibility for running in the drive belt and provides an advantageous shape for the protuberances which, whilst retaining advantageous ratios with respect to discharge of oil into the grooves and collection of oil in said grooves, is optimised with respect to correct and advantageous running-in wear and which prevents damage and has a beneficial effect on the period for which the belt can be put under load.

Running-in in accordance with the invention is possible by means of wearing down profile sections in the outermost layer of the profile to a depth of, for example, approximately 10 µm, in which layer the proportion of the profile that acts as a bearing surface is small, and thus the possibility of wear is high. Such an optimum possibility for initial wear prevents elements of the drive belt eating into the contact surface of the pulley, or giving rise to irregularities, such as scores, therein, during running-in of a belt and pulley combination. This possibility arises, for example, as a consequence of variation in width of successive elements in a belt, or the inequality therein with respect to an imaginary plane of symmetry between two pulley discs, or as a consequence of variation in the angle of the flanks of the elements. Such an element can be forced radially outwards under the pressure of the pulleys so that an adversely high tension and a local adversely high load on an innermost band of a composite band of the drive belt would be created. The possibility for initial wear created according to the invention thus also leads to optimum seating of a belt/pulley combination and also prevents belt breakage or damage to the pulley on running-in a relatively wide element between two pulley discs.

The construction according to the invention also has the advantage that the contact surface is initially minimal but, as a result of the preferably sinusoidal shape, relatively rapidly decreases by wear in a controlled manner until an equilibrium situation is reached in which further wear is negligible. The shape proposed according to the invention also has the advantage that the proportion of the contact surfaces which act as bearing surfaces adjust in an optimum manner in a belt/pulley combination to possibly varying values in hardness of the material of either the disc or the elements, or to a possibly varying composition of the material thereof.

It is pointed out that Japanese Patent Application 58-189587 published as JP-A-60-81537 discloses an element which has a contact surface that possesses an infinite number of minute projections, apparently present in stochastic distribution. The initial contact of said surface is at least twenty percent in order to prevent slip and wear. In contrast to what is disclosed in the said Japanese patent application, the aim in the present invention is for a slight but controlled degree of initial wear. The document provides no information on possible dimensions or tolerances of the shape of the projections.

The Derwent abstract of Japanese Patent Application 3-185686 published as JP-A-05-10405 discloses a contact surface having micro-irregularities obtained by so-called shot blasting. To increase resistance to wear, the rough surface thus obtained is smoothed until a specific proportion of the projections acting as bearing surfaces is reached. In contrast to this known construction, the present invention teaches that initial wear of the elements must be achieved during running-in of a belt in order thus to prevent shock loading, which can arise as a consequence of an unfavourable sequence of successive elements in a belt and of elements varying in width within a tolerance.

The invention will be explained in more detail below with reference to a drawing and a number of embodiments. In the drawing:
FIGURE 1 is a diagrammatic illustration of a transmission known per se to which the invention relates;
FIGURE 2 is a transverse view of a possible embodiment of a transverse element for a drive belt;
FIGURE 3 is a transverse view of another embodiment for a transverse element for a drive belt;
FIGURES 4a and 4b are longitudinal views of the transverse element from FIGURE 3 with, respectively, straight and oblique grooves, in accordance with the prior art;
FIGURE 5 is a diagrammatic cross-section of a groove pattern in accordance with the prior art;
FIGURE 6 is a vertical projection of one side of part of a mixed drive belt according to the prior art;
FIGURE 7 is a view corresponding to Figure 6 of a profile according to the invention;
FIGURE 8 is a view corresponding to Figure 6 of an alternative profile according to the invention;
FIGURE 9 is an illustrative plot of the course of wear of the profile with respect to the rotational speed of the drive belt.

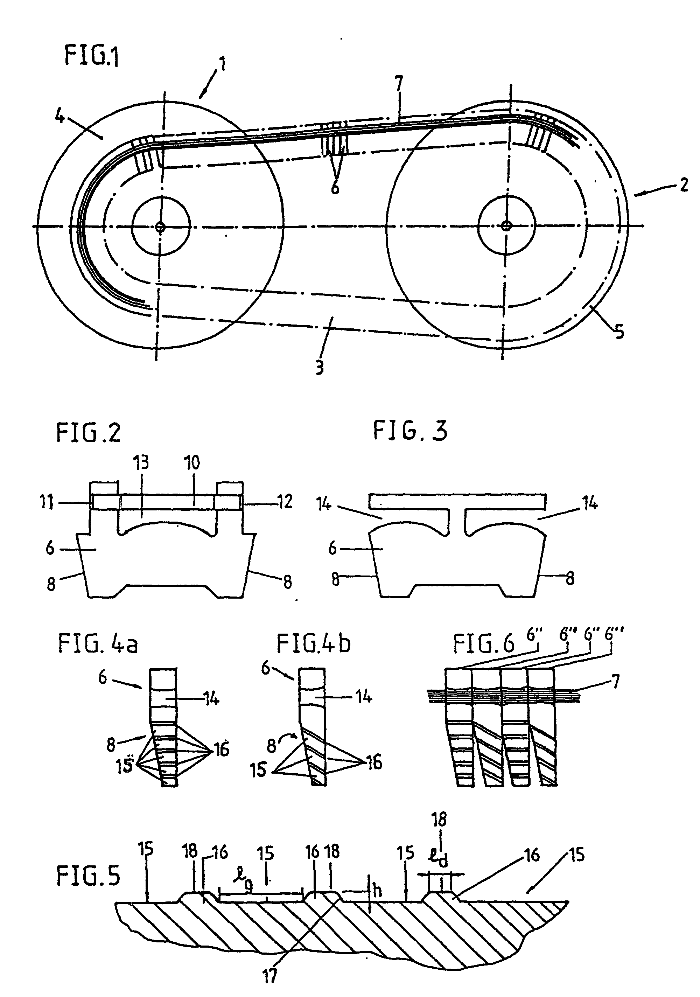

The drive in FIGURE 1 comprises a pair of slightly conical belt discs 1, 2 with a drive belt 3 fitted between them. In this embodiment the drive belt is provided with a support 7, on which the transverse elements 6 are movably mounted. One embodiment of such a transverse element is shown in FIGURE 2. The transverse element 6' concerned is provided with a recess 13 for accommodating a support which, for example, can consist of a bundle of metal bands. Said recess 13 can be closed at the top by means of a locking pin 10, which can be fitted in the bores 11 and 12 of the transverse element 6'. Another embodiment of a transverse element is shown in FIGURE 3. In this case the transverse element 6 concerned has a pair of recesses 14 in which a support 7 can be accommodated. The support 7 is usually formed by a bundle of continuous elements, such as flat, flexible metal bands, placed one on top of the other. In both embodiments the transverse elements, 6 and 6' respectively, are provided with converging side faces 8 which are able to engage on the respective conical contact surfaces 4 and 5 of the belt discs 1 and 2, which are usually arranged at an angle of approximately 11°. With this arrangement an oil film can be formed between the contact surfaces 4 and 5 on one side and the side faces 8 on the other side, as a consequence of which the drive belt is able to slip with respect to the belt discs 1 and 2 and as a result of which the transmitted torque decreases. The efficiency of the transmission will decrease as a result and excessive wear can occur. In order to prevent this the side faces 8 and/or the contact surfaces 4, 5 must be discontinuous or roughened.

FIGURES 4a and 4b illustrate the transverse elements 6 having side faces 8 provided with a profiled surface. Here the profile is defined by recesses in the form of grooves 15, which are parallel or oblique with respect to the longitudinal direction of the support 7, between protuberances in the form of ridges 16, which likewise can run parallel or obliquely with respect to the support 7. For the sake of simplicity, reference will always be made below to the grooved surfaces of the transverse elements; however, it will be clear that the same applies correspondingly to the contact surfaces 4 and 5 of the respective belt discs 1 and 2 and to profiles which are formed by gritting, shot blasting or shot peening. For further explanation of the invention it is, in essence, not important as to what is the precise pattern of the protuberances, for example formed stochastically as by shot blasting or formed in a predetermined manner and in this case with grooves or protuberances which, for example, are straight, oblique, stepped, curved or of some other shape.

FIGURE 5 is a cross-section of a groove profile known per se, at right angles to the contact surface 8 and in the lengthwise or depth direction thereof. The profile comprises ridges 16, which have an effective width Ld, and grooves positioned between said ridges, said grooves having an effective width Lg. The grooves act as a facility for receiving and removing the oil. It is desirable to remove oil rapidly so that there is no risk of an oil film being formed between the contact surfaces of transverse element and belt disc or, if an oil film has already been formed, to break this up and reduce it as quickly as possible. In order to achieve this, in accordance with the invention the effective width Ld of the ridges must be sufficiently small, so that the oil has to be moved only over a limited distance before it is collected in the grooves.

It has also been found that, apart from the effective width Lg of the groove 15 and the effective width Ld of the ridge 16, the total groove surface, that is to say also the groove depth h, is important. According to the invention, said groove depth is preferably within the range of 15-30 µm, so that there is a possibility of running-in or initial wear and that, on the one hand, even after running-in of the belt, or after wear of the side faces 8 of the elements, adequate groove volume is obtained, so that sufficient oil can be collected, and so that, on the other hand, the groove depth or the height of the protuberances or depth of the recesses is not so high that this causes failure of the protuberances.

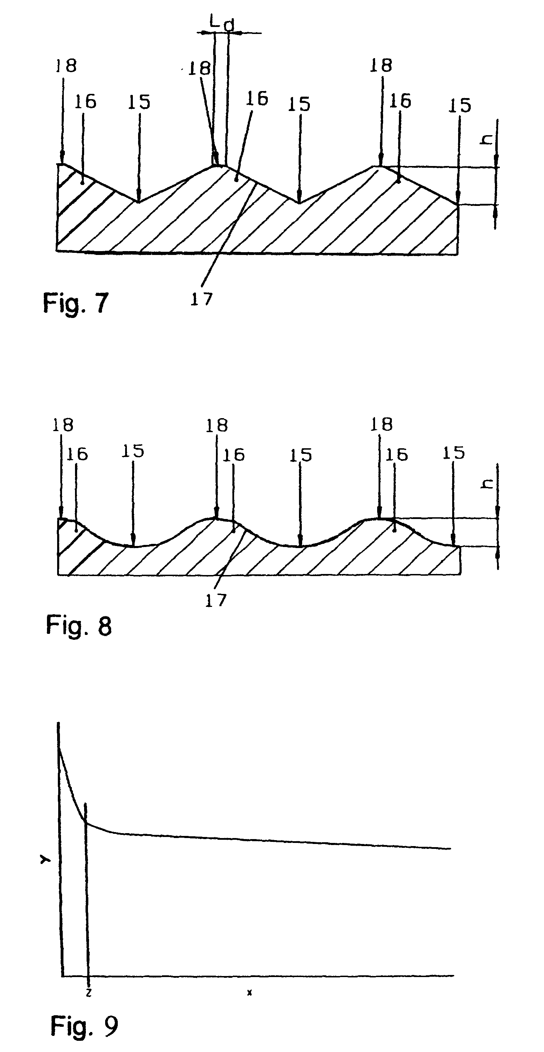

Figures 7 and 8 show alternatives of novel profiles, formed in accordance with the insights on which the invention is based, for the side faces 8. A good flow of the oil from a ridge 16 into the groove 15 is retained with these designs, so that a non-uniform flow with an undesirable pressure built-up is prevented with a relatively high degree of certainty. A sinusoidal profile is preferably used according to the invention. This profile on the one hand complies with the concept on which the present invention is based, that some degree of wear of the flank profile is desirable, because the profile has an initially minimal contact surface so that initial wear proceeds rapidly and easily, whilst, on the other hand, an at least quasi-equilibrium situation, in which the proportion acting as bearing surface is approximately fifty percent, is reached relatively rapidly. The proportion acting as bearing surface is the ratio of the surface area of the protuberances, or the surface area of all protuberances in a side face 8 which is effectively available to bear on a belt disc 1 and 2, to the total surface area in which the protuberances or recesses are accommodated, for example the surface area that is defined by the height and width of the side faces 8. The sinusoidal profile also has the advantage that the recesses do not have any sharp comers which could cause damage to the disc during running-in and that the resistance to failure is relatively high. Nevertheless, a ridge 16 according to the invention viewed in cross-section can be completely triangular, although fractional smoothing of the protuberances can be employed in connection with the sharpness of the point. After only slight running-in wear on the ridge 16, the contact face 18 of the ridge 16, which contact face runs parallel to the side face 8, will be so large that the ridge 16 undergoes only elastic deformation when subjected to contact stress with belt discs and wear is minimised. In this context FIGURE 9 illustrates the change in the average height h of the protuberance, plotted on the Y axis ("Y"), as a consequence of wear, as a function of the speed of revolution ("X") of the drive belt in a drive belt and belt disc unit according to Figure 1. The profile according to the invention has been optimised for advantageous utilisation of the initial wear of the elements, which phase changes close to point Z, after a few tens of thousands to a few hundreds of thousands of complete revolutions of the belt, into a quasi-steady situation in which the degree of wear of the profile tends towards zero.

The shape of a protuberance developed according to the invention promotes very rapid seating of a combination of belt disc with drive belt, which is beneficial with regard to the period for which the belt can be subjected to load. On the other hand, as a result of stabilisation of the proportion available as bearing surface at between forty and sixty percent and preferably approximately fifty percent after initial wear of thirty to seventy percent of the profile height, the shape according to the invention prevents clearing of oil to collection of oil in the grooves being adversely affected or the width of an element decreasing to such an extent that problems arise in relation to the margins for the distance between drive belt axis and element or between the belt disc 4, 5 and the bands 7. In a specific embodiment, a protuberance, at the height at which quasi-stabilisation of wear is considered to take place or takes place, has a width which, viewed "in profile" in accordance with Figures 7 and 8, is at most approximately, that is to say plus or minus 10 percent, 13 µm, preferably approximately 8 µm. The mutual spacing of the protuberances, that is to say the centre-to-centre distance, must be approximately three times as great in this case.

## Claims

1. Transverse element (6) intended to be accomodated in a drive belt (3) for a continuously variable transmission having belt discs (2) having an at least partially conical contact surface for enclosing a drive belt between pairs of said discs, which drive belt (3) to this end to comprise one or more transverse elements (6), the transverse element (6) being provided with converging side faces (8) intended to come into contact with the contact surface (4, 5) of a belt disc (1, 2), wherein one or more side faces (8) possess a surface which has protuberances providing a profile, which surface has therein contact faces (18), defined by the protuberances, for coming into contact with the contact surface (4, 5) of a belt disc (1, 2), **characterised in that** the profile is shaped such that on cross-sectioning parallel to the side face (8) concerned or after wear of the profile at or down to a level which is located at least thirty percent and at most seventy percent of the profile height (h) beneath the initial profile height (h), the surface area effectively available for coming into contact with the contact surface (4, 5) of a belt disc (1, 2) lies within the range of forty to sixty percent with respect to the dimensions of the side face (8) in which the contact faces (18) are present.

2. Element according to Claim 1, **characterised in that** a protuberance (16) is provided with outwardly converging flanks (17).

3. Element according to Claim 1 or 2, **characterised in that** the profile has an essentially sinusoidal shape.

4. Element according to one of the preceding claims, **characterised in that** the profile depth (h) is at least approximately 20 µm, at most approximately 30 µm and preferably approximately 25 µm.

5. Element according to one of the preceding claims, **characterised in that** the outside of the profile (8) has a fractionally smoothed shape.

6. Element according to one of the preceding claims, **characterised in that** a protuberance (16) produced as a ridge has a width (Ld) of at most approximately 0.13 µm at the height of the said level after wear or cross-sectioning and the mutual ridge spacing is at least twice as great and preferably approximately three times as great.

7. Drive belt (3) for a continuously variable transmission and having a transverse element in accordance with one of the preceding claims.

8. Belt disc (1, 2) intended to be accommodated in a continuously variable transmission, the contact surface (4, 5) of which in the radial direction is profiled correspondingly to the side face (8) according to one of the preceding claims 1-6.

9. Belt disc (1, 2) according to Claim 8, **characterised in that** the profile is provided with a single continuous, essentially concentric ridge (16) or with several to a very large number of essentially concentrically arranged ridges (16).

10. Continuously variable transmission or vehicle provided with one of the structural components, a transverse element, a drive belt, a belt disc, in accordance with the preceding claims.

## Patentansprüche

1. Transversalelement (6), das zur Aufnahme in einem Treibriemen (3) für ein stufenlos veränderliches Getriebe mit zwei Riemenscheiben (2) beabsichtigt ist, die eine wenigstens teilweise konische Berührungsfläche für die Umhüllung eines Treibriemens zwischen Paaren der besagten Scheiben haben, wobei der Treibriemen (3) für diesen Zweck ein oder mehrere Transversalelemente (6) aufweist, wobei das Transversalelement (6) mit konvergierenden Seitenflächen (8) versehen ist, welche dafür vorgesehen sind, mit der Berührungsfläche (4, 5) einer Riemenscheibe (1, 2) in Berührung zu kommen, wobei eine oder mehr Seitenflächen (8) eine Oberfläche besitzen, die Vorsprünge hat, welche ein Profil bereitstellen, wobei in der Oberfläche durch die Vorsprünge definierte Berührungsflächen (18) vorhanden sind, die mit der Berührungsfläche (4, 5) einer Riemenscheibe (1, 2) in Berührung kommen, **dadurch gekennzeichnet, dass** das Profil derart geformt ist, dass bei einem Querschnitt parallel zu der betreffenden Seitenfläche (8) oder nach einem Verschleiß des Profils an einem Niveau oder zu einem Niveau hinab, welches sich zu wenigstens dreißig Prozent und höchstens siebzig Prozent der Profilhöhe (h) unterhalb der anfänglichen Profilhöhe (h) befindet, der Flächenbereich der Oberfläche, der für die Berührung mit der Berührungsfläche (4, 5) einer Riemenscheibe (1,2) effektiv zur Verfügung steht, innerhalb eines Bereichs von vierzig bis sechzig Prozent in Bezug auf die Abmessungen der Seitenflächen (8) liegt, in welcher die Berührungsflächen (18) vorhanden sind.

2. Element nach Anspruch 1, **dadurch gekennzeichnet, dass** ein Vorsprung (16) mit nach außen konvergierenden Flanken (17) vorgesehen ist.

3. Element nach Anspruch 1 oder 2, **dadurch gekennzeichnet, dass** das Profil eine im wesentlichen sinusförmige Form hat.

4. Element nach einem der vorhergehenden Ansprüche, **dadurch gekennzeichnet, dass** die Profiltiefe (h) wenigstens etwa 20 µm, höchstens etwa 30 µm und vorzugsweise etwa 25 µm beträgt.

5. Element nach einem der vorhergehenden Ansprüche, **dadurch gekennzeichnet, dass** die äußere Seite des Profils (8) eine teilweise geglättete Form hat.

6. Element nach einem der vorhergehenden Ansprüche, **dadurch gekennzeichnet, dass** ein als eine Rippe erzeugter Vorsprung (16) eine Breite (Id) von höchstens etwa 0.13 µm in der Höhe des besagten Niveaus nach dem Verschleiß oder bei einem Querschnitt aufweist und der wechselseitige Rippenabstand wenigstens doppelt so groß und vorzugsweise etwa dreifach so groß ist.

7. Treibriemen (3) für ein stufenlos veränderliches Getriebe, der ein Transversalelement nach einem der vorhergehenden Ansprüche hat.

8. Riemenscheibe (1, 2), die zur Aufnahme in einem stufenlos veränderlichen Getriebe beabsichtigt ist, wobei deren Berührungsfläche (4, 5) in der radialen Richtung profiliert ist in Übereinstimmung mit der Seitenfläche (8) gemäß einem der vorhergehenden Ansprüche 1 bis 6.

9. Riemenscheibe (1,2) nach Anspruch 8, **dadurch gekennzeichnet, dass** das Profil mit einer einzigen fortlaufenden und im wesentlichen konzentrischen Rippe (16) oder mit einigen bis zu einer sehr großen Anzahl von in wesentlichen konzentrisch angeordneten Rippen (16) versehen ist.

10. Stufenlos veränderliches Getriebe oder Fahrzeug, das mit einem der strukturellen Komponenten eines Transversalelements, eines Treibriemens und einer Riemenscheibe nach einem der vorhergehenden Ansprüche versehen ist.

## Revendications

1. Elément transversal (6) venant se loger dans une courroie d'entraînement (3) pour une transmission à variation continue comportant des disques de courroie (2) ayant une surface de contact au moins partiellement conique afin de prendre une courroie d'entraînement entre des paires des disques, laquelle courroie d'entraînement (3) comprend à cette fin un ou plusieurs éléments transversaux (6), un élément transversal (6) comportant des faces latérales convergentes (8) venant en contact avec la surface de contact (4, 5) d'un disque de courroie (1, 2), une ou plusieurs faces latérales (8) possédant une surface comportant des protubérances formant un profil, la surface comportant des faces de contact (18) définies par les protubérances et entrant en contact avec la surface de contact (4, 5) d'un disque à courroie (1,2), **caractérisé en ce que** le profil possède une forme telle que, sur la section transversale parallèle à la face latérale (8) concernée, ou après l'usure du profil à un niveau ou en dessous d'un niveau situé a 30% au moins et 70% au plus de la hauteur (h) du profil en dessous de la hauteur initiale (h) du profil, la superficie effectivement disponible et venant en contact avec la surface de contact (4, 5) du disque de courroie (1, 2) se situe dans une plage de 40 à 60% par rapport aux dimensions de la face latérale (8) sur laquelle se trouvent les faces de contact (18).

2. Elément, selon la revendication 1, **caractérisé en ce qu'**une protubérance (16) comporte des flancs (17) convergeant vers l'extérieur.

3. Elément, selon la revendication 1 ou 2, **caractérisé en ce que** le profil possède une forme essentiellement sinusoïdale.

4. Elément, selon l'une quelconque des revendications précédentes, **caractérisé en ce que** la profondeur du profil (h) est d'environ 20 µm au moins, d'environ 30 µm au plus et, de préférence, d'environ 25 µm.

5. Elément, selon l'une quelconque des revendications précédentes, **caractérisé en ce que** l'extérieur du profile (8) a une forme lissé de manière fractionelle.

6. Elément, selon l'une quelconque des revendications précédentes, **caractérisé en ce qu'**une protubérance (16) sous forme d'une arête possède une largeur (Ld) d'environ 0,13 µm à la hauteur du niveau après l'usure vue en coupe, et l'espacement réciproque entre les arêtes est au moins deux fois plus important et, de préférance, environ trois fois plus important.

7. Courroie d'entraînement (3) pour une transmission à variation continue et comportant un élément transversal selon l'une quelconque des revendications précédentes.

8. Disque de courroie (1, 2) venant se loger dans une transmission à variation continue, et dont la surface de contact (4, 5) dans le sens radial est profilée en fonction de la face latérale (8) selon l'une quelconque des revendications précédentes 1 à 6.

9. Disque de courroie (1, 2), selon la revendication 8, **caractérisé en ce que** le profil comporte une arête unique, continue et essentiellement concentrique (16), ou plusieurs ou même un très grand nombre d'arêtes (16) disposées de manière essentiellement concentrique.

10. Tranmission à variation continue ou véhicule comportant l'un des composants structurels que sont l'élément transversal, la courroie d'entraînement et le disque de courroie selon les revendications précédentes.
